# EUROPÄISCHE PATENTSCHRIFT

(11) **EP 3 120 017 B1**
(45) Veröffentlichungstag und Bekanntmachung des Hinweises auf die Patenterteilung: **01.07.2020**
(21) Anmeldenummer: 15711506.4
(22) Anmeldetag: 20.03.2015
(51) Int. Cl.: F03D 1/06

(54) **WINDENERGIEANLAGEN-ROTORBLATT MIT ROTORBLATTANSCHLUSS SOWIE HERSTELLUNGSVERFAHREN**
WIND TURBINE ROTOR BLADE WITH A ROTOR BLADE CONNECTION AND METHOD FOR PRODUCING SAME
PALE DE ROTOR D'ÉOLIENNE ÉQUIPÉE D'UN RACCORD DE PALE DE ROTOR ET PROCÉDÉ DE FABRICATION

(30) Priorität: 20.03.2014 DE 102014205195
(43) Veröffentlichungstag der Anmeldung: 25.01.2017
(73) Patentinhaber: Wobben Properties GmbH, 26607 Aurich (DE)
(72) Erfinder: HOFFMANN, Alexander, 26721 Emden (DE)
(74) Vertreter: Eisenführ Speiser
(86) Internationale Anmeldenummer: PCT/EP2015/055925
(87) Internationale Veröffentlichungsnummer: WO 2015/140295

(56) Entgegenhaltungen:
- EP-A1- 2 400 147
- EP-A1- 2 623 771
- WO-A1-2006/070171
- WO-A2-2010/067082
- FR-A1- 2 863 321
- US-A- 4 260 332

## Beschreibung

Die vorliegende Erfindung betrifft ein Windenergieanlagen-Rotorblatt, einen Windenergieanlagen-Rotorblattanschluss sowie eine Windenergieanlage.

Rotorblätter einer Windenergieanlage weisen einen Rotorblattanschluss auf, über welchen das Rotorblatt an einer Nabe der Windenergieanlage befestigt werden kann. Der Rotorblattanschluss stellt somit die Schnittstelle des Rotorblattes zu dem Rest der Windenergieanlage dar. Der Rotorblattanschluss muss somit die gesamten Kräfte und Momente, welche auf das Rotorblatt beim Betrieb einwirken, aufnehmen und an den Rest der Windenergieanlage weiterleiten können. Der Rotorblattanschluss muss ferner dazu geeignet sein, eine Verstellung der Rotorblätter (Pitchverstellung) zu ermöglichen.

DE 197 33 372 C2 beschreibt ein Rotorblatt einer Windenergieanlage sowie einen Rotorblattanschluss. Der Rotorblattanschluss ist im Bereich der Rotorblattwurzel vorgesehen und weist Querbolzen quer zur Längsrichtung des Rotorblattes auf. Diese Querbolzen werden in quer zur Längsachse des Rotorblattes vorgesehenen Ausnehmungen angeordnet. Beispielsweise mittels Schrauben kann das Rotorblatt dann an einer Nabe der Windenergieanlage befestigt werden, wobei die Schrauben in die Querbolzen hineinragen und an diesen befestigt sind. Ein Metallflansch kann an dem wurzelseitigen Ende des Rotorblattes verschraubt werden, wobei die Schrauben in die Querbolzen eingreifen. Das Rotorblatt wird dann mittels des metallischen Flansches an einer Nabe der Windenergieanlage befestigt.

DE 103 24 166 A1 zeigt ein Rotorblatt einer Windenergieanlage mit Durchgangslöchern im Rotorblattwurzelbereich, welche sich quer zur Längsachse erstrecken. In diese Löcher können Querbolzen eingesetzt werden. Das Rotorblatt kann dann über außerhalb der Rotorblattwurzel verlaufende Schrauben an dem Querbolzen befestigt werden. Zur Aufnahme der Quer- und der Längsbolzen müssen Bohrungen in dem rotorblattwurzelnahen Bereich vorgesehen sein. Derartige Bohrungen können aber zu einer Schwächung der Rotorblattwurzel führen.

In der prioritätsbegründenden deutschen Patentanmeldung hat das Deutsche Patent- und Markenamt die folgenden Dokumente recherchiert: DE 19733372 C1, DE 102006022272, DE 10324166 A1 und DE 112010003218 T5 Weitere Beispiele aus dem Stand der Technik werden in FR2863321, WO2006070171 und EP2623771 offenbart.

Es ist eine Aufgabe der vorliegenden Erfindung, ein Windenergieanlagen-Rotorblatt und einen Windenergieanlagen-Rotorblattanschluss vorzusehen, welche eine verbesserte Befestigung des Rotorblattes an dem Rest der Windenergieanlage ermöglichen.

Diese Aufgabe wird durch ein Windenergieanlagen-Rotorblatt nach Anspruch 1, einen Windenergieanlagen-Rotorblattanschluss nach Anspruch 3 und durch eine Windenergieanlage nach Anspruch 15 gelöst.

Somit wird ein Windenergieanlagen-Rotorblatt mit einer Rotorblattspitze, einer Rotorblattwurzel und einem Rotorblattanschluss im Bereich der Rotorblattwurzel mit einer rotationssymmetrischen Flanschverbindung vorgesehen, die ein erstes und zweites Ende aufweist. Das erste Ende der Flanschverbindung weist eine Mehrzahl von Bohrungen zur Aufnahme von Befestigungsmitteln zur Befestigung an einer Nabe einer Windenergieanlage auf. Das zweite Ende ist in oder an einem Material der Rotorblattwurzel, z. B. ein Faser-Verbundwerkstoff (CFK, GFK), befestigt. Das zweite Ende erstreckt sich in Richtung einer Rotationsachse der Flanschverbindung. Optional ist der Faser-Verbundwerkstoff um das zweite Ende gewickelt.

Gemäß einem Aspekt der vorliegenden Erfindung weist das zweite Ende eine Mehrzahl von sich in Richtung der Rotationsachse der Flanschverbindung erstreckenden Zungen oder Vorsprünge auf, die in oder an einem Material des Rotorblattes befestigt werden. Über die Zungen oder Vorsprünge kann ein Formschluss oder Stoffschluss zwischen der Flanschverbindung und dem Material des Rotorblattes vorgesehen werden.

Gemäß einem weiteren Aspekt der vorliegenden Erfindung weist das erste Ende der Flanschverbindung zwei Arme auf, welche jeweils eine Stirnseite und eine Mehrzahl von Bohrungen in der Stirnseite aufweisen. Durch das Vorsehen der beiden Arme am ersten Ende kann erheblich Material im Bereich des ersten Endes eingespart werden.

Gemäß einem weiteren Aspekt der vorliegenden Erfindung weist das erste Ende im Bereich der Bohrungen einen ersten Abschnitt und zwischen den Bohrungen einen zweiten Abschnitt auf. Die Breite des zweiten Abschnitts ist kleiner als die Breite des ersten Abschnitts, Im Bereich des ersten Abschnitts sind Ausnehmungen auf zumindest einer Seite der Arme vorgesehen. Somit kann weiter Material eingespart werden, was zu einer Gewichtsreduzierung der Flanschverbindung führt.

Gemäß einem weiteren Aspekt der vorliegenden Erfindung ist der Querschnitt der Flanschverbindung im Wesentlichen Y-förmig ausgestaltet.

Gemäß einem weiteren Aspekt der vorliegenden Erfindung weisen die Zungen oder Vorsprünge des zweiten Endes der Flanschverbindung an zumindest einer Seite mindestens einen Insert und/oder ein Profil auf, wobei das Profil ein Schraubengewinde, ein Trapezgewinde oder ein Sägegewinde darstellen kann.

Gemäß einem weiteren Aspekt der vorliegenden Erfindung ist das zweite Ende der Flanschverbindung in das Material der Rotorblattwurzel eingewickelt.

Gemäß einem weiteren Aspekt der vorliegenden Erfindung können die Zungen oder Vorsprünge des zweiten Endes der Flanschverbindung gerade oder wellig ausgestaltet sein.

Gemäß einem weiteren Aspekt der vorliegenden Erfindung ist die Flanschverbindung aus einem Metall hergestellt und ist insbesondere gegossen, z.B. in einem Sphäroguss-Verfahren ausgestaltet.

Die Erfindung betrifft ebenfalls einen Windenergieanlagen-Rotorblattanschluss mit einer rotationssymmetrischen Flanschverbindung, die ein erstes und zweites Ende aufweist, wobei das zweite Ende eine Mehrzahl von Bohrungen zur Aufnahme von Befestigungsmitteln zur Befestigung an einer Nabe einer Windenergieanlage aufweist. Das zweite Ende erstreckt sich in Richtung einer Rotationsachse der Flanschverbindung und ist in oder an einem Material des Rotorblattes zu befestigen.

Die Erfindung betrifft einen Gedanken, eine Flanschverbindung (z. B. aus Metall) als Bestandteil des Rotorblattanschlusse vorzusehen. Der Rest des Rotorblattes kann dann an der Flanschverbindung befestigt werden. Die Flanschverbindung kann beispielsweise aus Metall bestehen, während das Rotorblatt aus einem Verbundwerkstoff (z. B. Glasfaser-verstärkter Kunststoff GFK oder Kohlenfaser-verstärkter Kunststoff CFK) hergestellt werden kann. Die Flanschverbindung kann Bohrungen an ihrem einen Ende aufweisen, so dass das Rotorblatt mittels der Flanschverbindung an einer Nabe der Windenergieanlage beispielsweise mittels Schrauben befestigt werden kann. Die Bohrungen können als Sackloch oder als Durchgangsbohrung ausgestaltet sein. Falls die Bohrung als Sackloch ausgestaltet ist, kann optional ein Innengewinde vorgesehen sein. Das andere Ende der Flanschverbindung wird an dem Rotorblatt befestigt.

Dadurch, dass die Sacklöcher oder Durchgangslöcher in der metallischen Flanschverbindung vorgesehen sind, können die Flanschverbindung sowie das daran befestigte Rotorblatt auf einfache Art und Weise an der Nabe der Windenergieanlage befestigt werden oder abmontiert werden. Das Vorsehen der metallischen Flanschverbindung als Teil des Rotorblattanschlusses ist vorteilhaft, weil somit weder Längs- noch Querbohrungen in dem wurzelblattnahen Bereich vorgesehen sein müssen. Dies führt zu einer erheblichen Zeiteinsparung bei der Produktion von Windenergieanlagen-Rotorblättern. Gemäß einem Aspekt der vorliegenden Erfindung kann die Metallflansch-Verbindung eingewickelt werden.

Gemäß der Erfindung weist der Rotorblattanschluss eine im Querschnitt T-förmige oder Y-förmige Flanschverbindung auf.

Optional ist die Flanschverbindung rotationssymmetrisch ausgestaltet.

Der Rotorblattanschluss weist an seinem ersten Ende eine Mehrzahl von Sacklöchern oder Durchgangsbohrungen auf. Das erste Ende des Rotorblattanschlusses wird an einer Nabe der Windenergieanlage beispielsweise verschraubt. Ein zweites Ende des Rotorblattanschlusses wird in dem rotorblattwurzelnahen Bereich des Rotorblattes befestigt bzw. integriert. Das zweite Ende des Rotorblattanschlusses kann eine Mehrzahl von Zungen aufweisen. Die Zungen können beispielsweise die Form eines Tropfens oder eines Löffels aufweisen. Durch die Tropfenform oder Löffelform der Zungen bzw. durch die Zungen an sich kann ein Formschluss zwischen dem Rotorblattanschluss und dem rotorblattwurzelnahen Bereich des Rotorblattes ermöglicht werden.

Die Aufgabe des Rotorblattanschlusses ist zum Einen die Verbindung des Rotorblattes zur Nabe, aber auch die Übertragung der Kräfte, die auf das Rotorblatt wirken, in die Nabe hinein. Die Verbindung zwischen dem Rotorblattanschluss und der Nabe sollte lösbar sein, um eine Montage, Demontage oder Reparatur zu ermöglichen.

Gemäß der Erfindung wird ein Windenergieanlagen-Rotorblatt mit einem Rotorblattanschluss an der Rotorblattwurzel vorgesehen. Der Rotorblattanschluss weist einen Verbindungsflansch bzw. eine Flanschverbindung auf, die ein erstes und zweites Ende aufweist.

An dem ersten Ende ist eine Mehrzahl von Bohrungen zur Aufnahme von Befestigungsmitteln vorgesehen. Das erste Ende weist eine Stirnseite auf, welche eine erste Ebene aufspannt. An dem zweiten Ende ist eine Mehrzahl von Zungen vorgesehen. Die Zungen erstrecken sich optional senkrecht zur ersten Ebene, welche durch die Stirnseite des ersten Endes aufgespannt ist.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische Schnittansicht eines Teils eines Rotorblatts einer Windenergieanlage gemäß dem ersten Ausführungsbeispiel,
- Fig. 3: zeigt eine schematische Schnittansicht eines Rotorblattanschlusses für ein Rotorblatt einer Windenergieanlage gemäß einem zweiten Ausführungsbeispiel,
- Fig. 4: zeigt eine perspektivische Schnittansicht einer Flanschverbindung eines Rotorblattanschlusses eines Rotorblatts gemäß einem dritten Ausführungsbeispiel,
- Fig. 5: zeigt eine perspektivische Ansicht einer Flanschverbindung eines Rotorblattanschlusses gemäß einem vierten Ausführungsbeispiel,
- Fig. 6A: zeigt eine schematische Schnittansicht einer Flanschverbindung gemäß einem fünften Ausführungsbeispiel,
- Fig. 6B: zeigte eine schematische Draufsicht auf ein Ende einer Flanschverbindung von Fig. 6A,
- Fig. 7: zeigt eine perspektivische Ansicht einer Flanschverbindung eines Rotorblattanschlusses gemäß einem sechsten Ausführungsbeispiel,
- Fig. 8: zeigt eine schematische perspektivische Ansicht einer Flanschverbindung eines Rotorblattanschlusses gemäß einem siebten Ausführungsbeispiel,
- Fig. 9: zeigt eine schematische Darstellung eines Endes einer Flanschverbindung gemäß dem achten Ausführungsbeispiel,
- Fig. 10: zeigt eine perspektivische Schnittansicht einer Flanschverbindung eines Rotorblattanschlusses gemäß dem neunten Ausführungsbeispiel,
- Fig. 11: zeigt eine perspektivische Darstellung eines Ausschnitts einer Flanschverbindung eines Rotorblattanschlusses gemäß dem zehnten Ausführungsbeispiel,
- Fig. 12: zeigt eine schematische Darstellung der Herstellung eines Rotorblattes gemäß einem elften Ausführungsbeispiel,
- Fig. 13: zeigt eine schematische Schnittansicht einer Flanschverbindung gemäß einem zwölften Ausführungsbeispiel,
- Fig. 14: zeigt eine perspektivische Darstellung eines Ausschnitts einer Flanschverbindung gemäß dem zwölften Ausführungsbeispiel,
- Fig. 15: zeigt eine schematische Schnittansicht einer Flanschverbindung eines Rotorblattanschlusses gemäß einem dreizehnten Ausführungsbeispiel, und
- Fig. 16: zeigt eine schematische Darstellung eines Ausschnitts einer Flanschverbindung des Rotorblattanschlusses gemäß dem dreizehnten Ausführungsbeispiel.

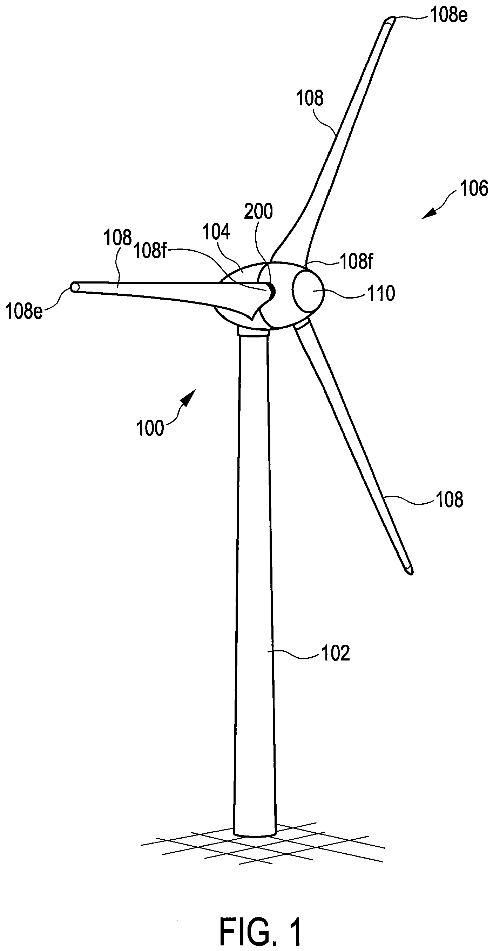

Fig. 1 zeigt eine schematische Darstellung einer Windenergieanlage gemäß der Erfindung. Die Windenergieanlage 100 weist einen Turm 102 und eine Gondel 104 auf. An der Gondel 104 ist ein Rotor 106 mit drei Rotorblättern 108 und einem Spinner 110 vorgesehen. Die Rotorblätter 108 weisen jeweils eine Rotorblattspitze 108e und eine Rotorblattwurzel 108f auf. Das Rotorblatt 108 wird an der Rotorblattwurzel 108f an einer Nabe des Rotors 106 befestigt. Der Rotor 106 wird im Betrieb durch den Wind in eine Drehbewegung versetzt und dreht damit auch direkt oder indirekt einen Rotor oder Läufer eines elektrischen Generators in der Gondel 104. Die Rotorblätter 108 sind über einen Rotorblattanschluss 200 mit dem Rotor und insbesondere einer Nabe der Windenergieanlage verbunden. Der Pitchwinkel der Rotorblätter 108 kann durch Pitchmotoren an den Rotorblattwurzeln bzw. an dem Rotorblattanschluss 200 der jeweiligen Rotorblätter 108 verändert werden.

Die Erfindung betrifft insbesondere die Ausgestaltung des Rotorblattanschlusses, d. h. das Ende des Rotorblattes, welches an einer Nabe des Rotors befestigt wird.

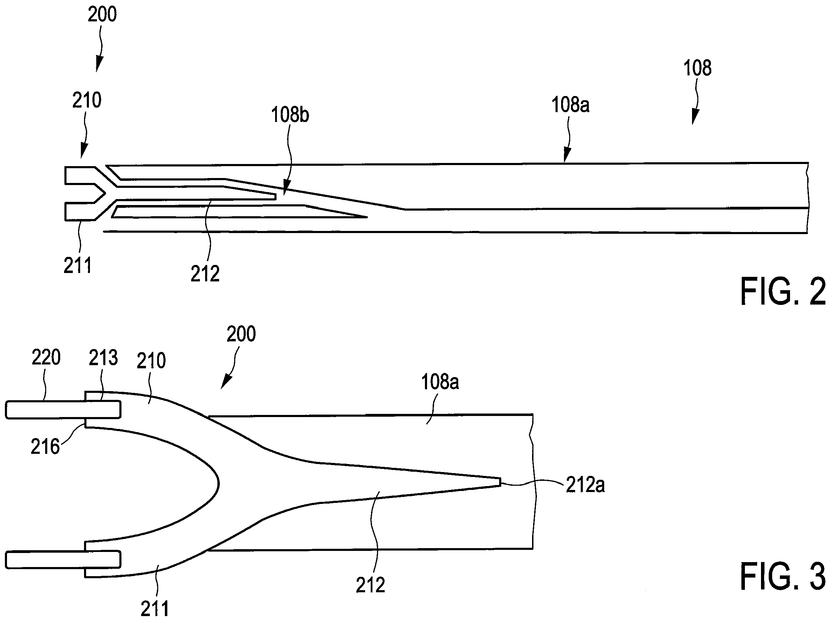

Fig. 2 zeigt einen schematischen Querschnitt eines Rotorblatts und insbesondere einen Querschnitt des Rotorblattwurzelbereiches mit dem Rotorblattanschluss 200. Der Rotorblattanschluss 200 weist eine Flanschverbindung 210 auf. Die Flanschverbindung 210 weist eine erstes Ende 211 und ein zweites Ende 212 auf. Das erste Ende 211 dient dazu, das Rotorblatt 108 direkt oder indirekt an einer Nabe einer Windenergieanlage zu befestigen. Das zweite Ende 212 wird in das Rotorblattmaterial, welches ein Faser-Verbund-Werkstoff wie beispielsweise GFK oder CFK darstellen kann, integriert. Insbesondere kann der Faser-Verbund-Werkstoff um das zweite Ende gewickelt werden. Hierbei kann das erste Ende 212 zwischen einem ersten und zweiten Rotorblattmaterialabschnitt 108a, 108b befestigt werden.

Die Flanschverbindung 210 ist optional aus Metall hergestellt, z. B. gegossen oder in einem Sphäroguss-Verfahren. An dem ersten Ende 211 können Sacklöcher vorgesehen sein, welche Schrauben 220 zur Befestigung des Rotorblattanschlusse an der Nabe aufnehmen können.

In Fig. 2 ist lediglich ein Ausschnitt des Rotorblattes bzw. der Rotorblattwurzel mit dem Rotorblattanschluss gezeigt. Der Rotorblattanschluss sowie die Rotorblattwurzel sind typischerweise rotationssymmetrisch ausgestaltet.

Fig. 3 zeigt einen schematischen Querschnitt eines Rotorblattanschlusses eines Rotorblatts einer Windenergieanlage gemäß einem zweiten Ausführungsbeispiel. Der Rotorblattanschluss 200 weist eine Flanschverbindung 210 auf, welche im Querschnitt im Wesentlichen Y-förmig ausgestaltet sein kann. Die Flanschverbindung 210 weist ein erstes Ende 211 und ein zweites Ende 212 auf. Das erste Ende 211 weist zwei Arme jeweils mit einer Stirnseite 216 auf. In der Stirnseite 216 sind Sacklöcher 213 vorgesehen. Die Sacklöcher 213 können Schrauben 220 aufnehmen, welche zur Befestigung des Rotorblattanschlusses 200 und damit des Rotorblattes 108 an einer Nabe der Windenergieanlage verwendet werden. Die Befestigung kann hierbei direkt oder indirekt erfolgen. Das zweite Ende 212 weist eine Spitze 212a auf und ist in einem Material des Rotorblattes, beispielsweise ein Verbundmaterial 108a, integriert.

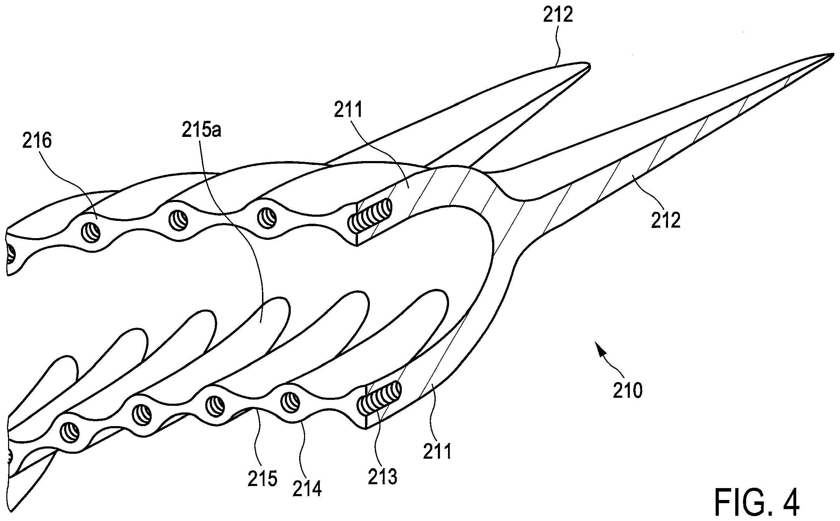

Fig. 4 zeigt eine perspektivische Schnittansicht einer Flanschverbindung 210 eines Rotorblattanschlusses eines Rotorblatts einer Windenergieanlage gemäß einem dritten Ausführungsbeispiel. Die Flanschverbindung 210 gemäß dem dritten Ausführungsbeispiel kann wie in dem ersten oder zweiten Ausführungsbeispiel gezeigt in oder an dem Rotorblattmaterial des Rotorblattes befestigt werden. Die Flanschverbindung 210 gemäß dem dritten Ausführungsbeispiel weist ein erstes Ende 211 und ein zweites Ende 212 auf. Der Querschnitt der Flanschverbindung 210 kann Y-förmig ausgestaltet sein. Das erste Ende 211 weist zwei Arme 211 auf, welche jeweils eine Stirnseite 216 aufweisen. In den beiden Armen 211 können Sacklöchern 213 vorgesehen sein. Im Bereich der Sacklöcher 213 ist die Breite der Stirnseite 216 größer als in den Bereichen 215 zwischen den Sacklöchern 213. Somit kann eine minimale Wandstärke vorgesehen sein. Durch die Ausgestaltung der Bereiche 215 zwischen den Sacklöchern, welche eine geringere Breite aufweisen als die Bereiche 240, kann es zu einer Materialeinsparung kommen. Die Bereiche 215a können sich wie in Fig. 4 gezeigt entlang der Arme 211 sowohl innen als auch außen erstrecken.

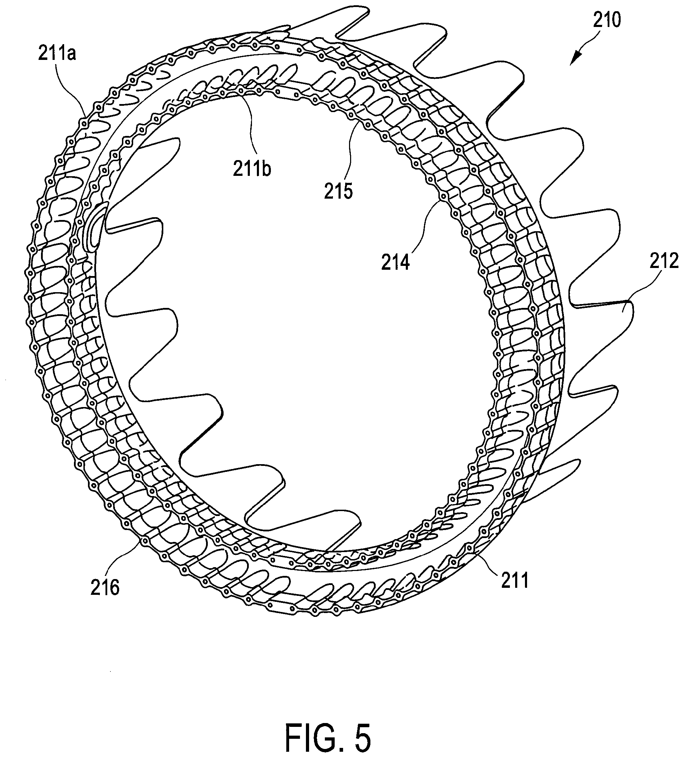

Fig. 5 zeigt eine perspektivische Ansicht einer Flanschverbindung gemäß dem vierten Ausführungsbeispiel. Die Flanschverbindung gemäß dem vierten Ausführungsbeispiel kann der Flanschverbindung gemäß dem dritten Ausführungsbeispiel entsprechen. Die Flanschverbindung weist ein erstes Ende 211 mit einer Stirnseite 216 und ein zweites Ende 212 mit einer Mehrzahl von Zungen 212 auf, die sich z. B. verjüngen und eine runde Spitze aufweisen. Die Zungen 212 werden in oder an einem Material des Rotorblattes befestigt bzw. integriert. Das erste Ende 211 weist im Querschnitt zwei Arme 211a, 211b auf, welche jeweils eine Stirnseite 216, eine Mehrzahl von Bohrungen 213, eine Mehrzahl von ersten Abschnitten 214 im Bereich der Bohrungen 213 und eine Mehrzahl von zweiten Abschnitten 215 zwischen den Bohrungen 213 aufweisen. Die Abschnitte 215 weisen eine geringere Dicke auf als die Abschnitte 214. Dies dient der Materialeinsparung.

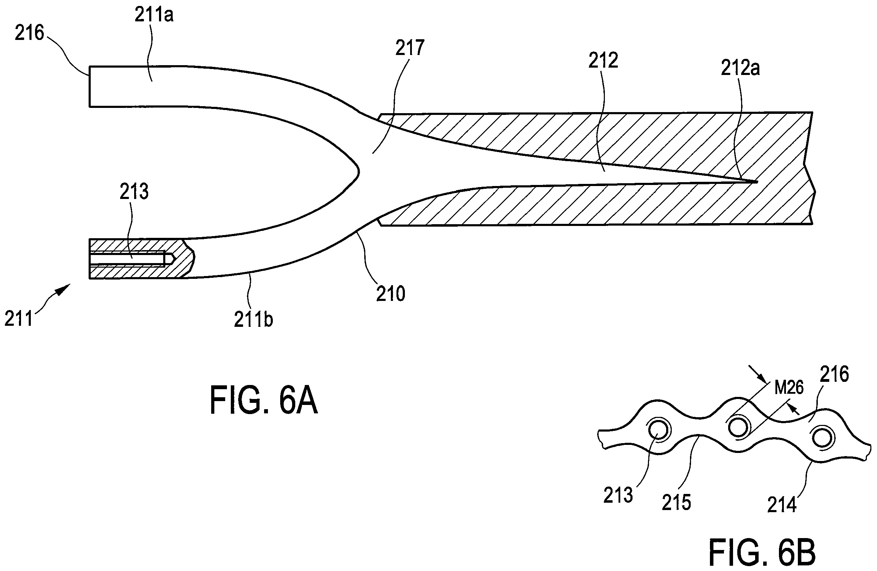

Fig. 6A zeigt eine schematische Schnittansicht einer Flanschverbindung eines Rotorblattanschlusses gemäß einem fünften Ausführungsbeispiel. Die Flanschverbindung 210 weist ein erstes Ende 211 und ein zweites Ende 212 auf. Das erste Ende 211 kann zwei Arme 211a, 211b aufweisen, welche jeweils über eine Stirnseite 216 verfügen. In der Stirnseite 216 kann eine Mehrzahl von Sackbohrungen bzw. Bohrungen 213 vorgesehen sein. Die beiden Arme 211a, 211b treffen sich in einem mittleren Abschnitt 217.

Fig. 6B zeigt eine Draufsicht auf die Stirnseite der Flanschverbindung von Fig. 6A. In der Stirnseite sind mehrere Bohrungen 213 vorgesehen. Im Bereich der Bohrungen ist ein erster Abschnitt 214 und im Bereich zwischen den Bohrungen ist ein zweiter Abschnitt 215 vorgesehen. Die Breite des Abschnitts 215 ist kleiner als die Breite des Abschnitts 214. Mit der in Fig. 6B gezeigten Ausgestaltung kann eine Mindestmaterialdicke sichergestellt werden, während das Gewicht der Flanschverbindung 210 soweit es geht minimiert wird.

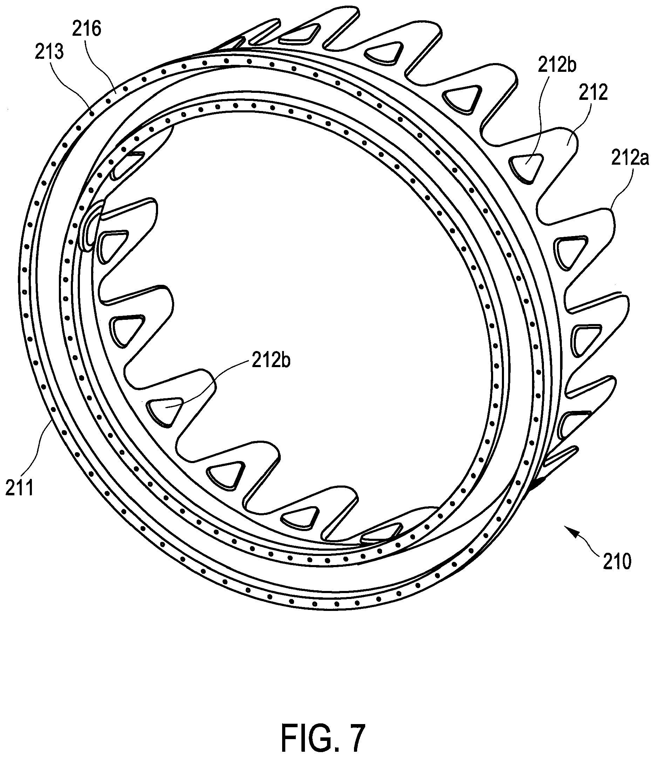

Fig. 7 zeigt eine schematische perspektivische Ansicht einer Flanschverbindung eines Rotorblattanschlusses eines Rotorblatts gemäß einem sechsten Ausführungsbeispiel. Die Flanschverbindung weist ein erstes Ende 211 und ein zweites Ende 212 auf. Das erste Ende 211 weist im Querschnitt zwei Arme jeweils mit einer Stirnseite 216 und Bohrungen 213 in der Stirnseite auf. Das zweite Ende 212 weist eine Mehrzahl von Zungen 212 auf, die sich verjüngen und eine runde Spitze aufweisen können. Auf den Zungen 212 kann jeweils ein Insert 212b vorgesehen werden. Der Insert 212b kann auf der Innen- und/oder Außenseite vorgesehen sein. Im Gegensatz zu dem dritten, vierten und fünften Ausführungsbeispiel ist die Breite der Stirnseite 216 gemäß dem sechsten Ausführungsbeispiel konstant. Dies ist zwar einfacher in der Produktion, erhöht aber auch das Gewicht der Flanschverbindung 210 im Vergleich zum dritten, vierten oder fünften Ausführungsbeispiel.

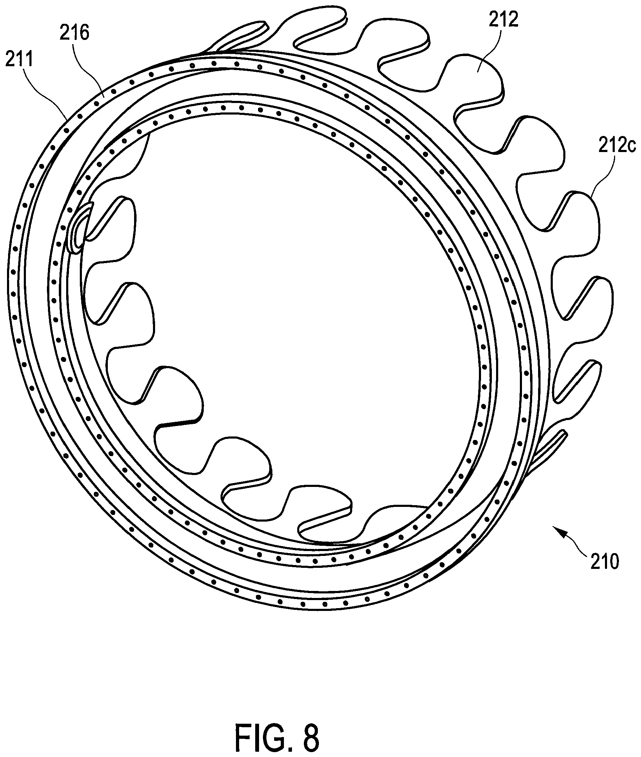

Fig. 8 zeigt eine schematische Darstellung eines Verbindungsflansches eines Rotorblattanschlusses eines Rotorblatts gemäß dem siebten Ausführungsbeispiel. Der Verbindungsflansch weist ein erstes Ende 211 zur Verbindung des Rotorblattanschlusses mittelbar oder unmittelbar an einer Nabe einer Windenergieanlage und ein zweites Ende 212 auf, welches in oder an dem Material des Rotorblattes befestigt wird. Das zweite Ende 212 weist eine Mehrzahl von Zungen 212c auf, welche beispielsweise eine Löffelform aufweisen. Die Breite der Zungen 212c nimmt zunächst zu. Die Spitzen der Zungen 212c sind rund ausgestaltet. Werden formgenau Gegenstücke des Rotorblattmaterials (108a oder 108b) zwischen die Zungen mit Löffelform 212c gelegt, so ergibt sich ein Formschluss zwischen dem Verbindungsflansch 200 und dem Material des Rotorblatts 108.

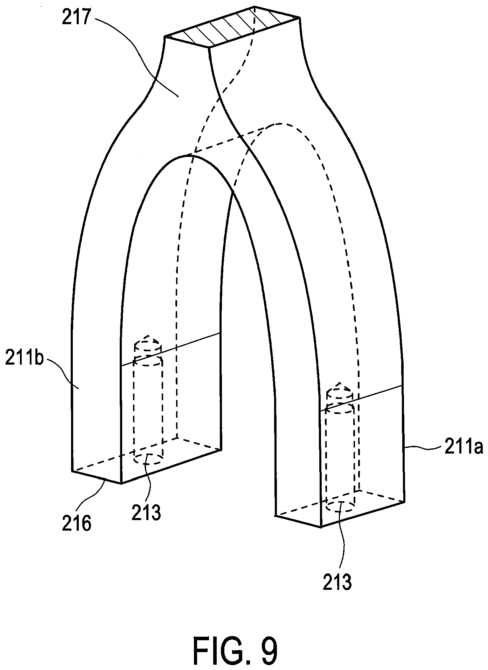

Fig. 9 zeigt eine schematische Darstellung eines Abschnitts einer Flanschverbindung eines Rotorblattanschlusses eines Rotorblatts gemäß einem achten Ausführungsbeispiel. In Fig. 9 ist insbesondere das erste Ende 211 der Flanschverbindung 210 gezeigt. Das erste Ende weist im Querschnitt zwei Arme 211a, 211b jeweils mit einer Stirnseite 216 und einer Mehrzahl von Bohrungen 213 in der Stirnseite 216 auf. Die beiden Arme 211a, 211b treffen sich in einem mittleren Abschnitt 217.

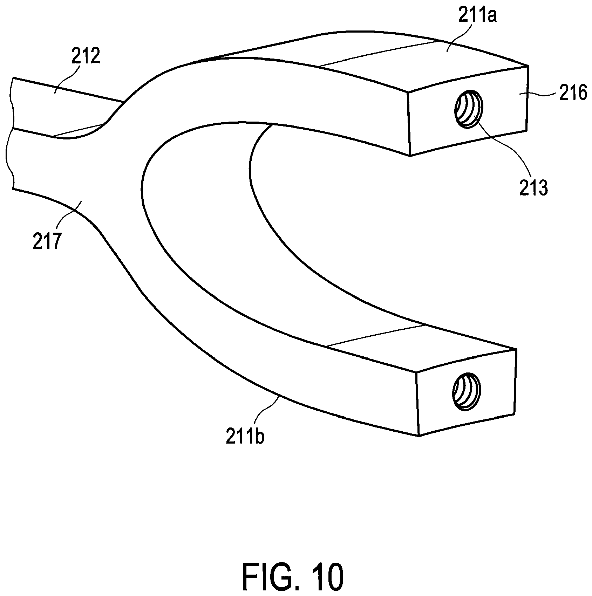

Fig. 10 zeigt eine weitere schematische Darstellung eines Ausschnitts einer Flanschverbindung eines Rotorblattanschlusses eines Rotorblatts einer Windenergieanlage gemäß einem neunten Ausführungsbeispiel. In Fig. 10 ist insbesondere ein Ausschnitt aus der Flanschverbindung 210 gezeigt. Die Flanschverbindung 210 ist rotationssymmetrisch ausgestaltet. Die Flanschverbindung weist ein erstes Ende 211, einen mittleren Abschnitt 217 und ein zweites Ende 212 auf. Das erste Ende 211 weist im Querschnitt zwei Arme 211a, 211b jeweils mit einer Stirnseite 216 und einer Mehrzahl von Bohrungen 213 in der Stirnseite auf.

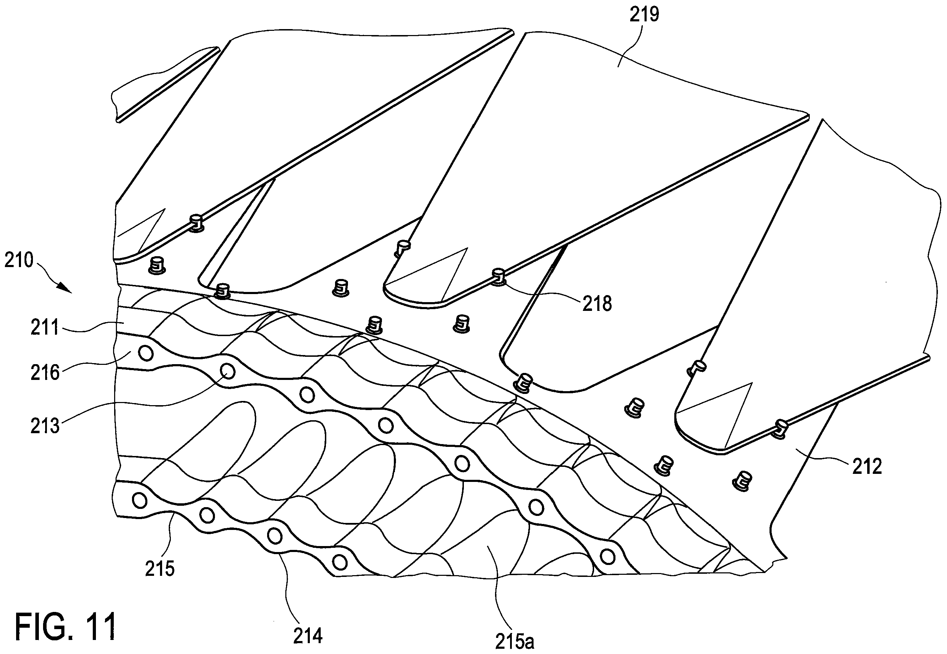

Fig. 11 zeigt eine schematische perspektivische Ansicht eines Ausschnitts einer Flanschverbindung eines Rotorblattanschlusses eines Rotorblatts gemäß dem zehnten Ausführungsbeispiel. Die Flanschverbindung 210 weist ein erstes Ende 211 und ein zweites Ende 212 auf. Das erste Ende 211 dient dazu, dass der Rotorblattanschluss direkt oder indirekt an einer Nabe einer Windenergieanlage befestigt wird. Das zweite Ende 212 wird in oder an einem Rotorblattmaterial befestigt.

Das erste Ende 211 weist im Querschnitt zwei Arme 211 jeweils mit einer Stirnseite 216 und einer Mehrzahl von Bohrungen 213 in der Stirnseite 216 auf. Im Bereich der Bohrungen 213 ist ein erster Abschnitt 214 und im Bereich zwischen den Bohrungen ist ein zweiter Abschnitt 215 vorgesehen. Die Dicke des zweiten Abschnitts 215 ist kleiner als die Dicke des ersten Abschnitts 214. Auf der Innen- und/oder Außenseite der Arme 211 erstreckt sich der zweite Abschnitt 215 und weist jeweils Ausnehmungen 215a auf. Durch die unterschiedlichen Dicken im ersten und zweiten Abschnitt 214, 215 wird sichergestellt, dass eine Mindestmaterialdicke vorgesehen ist, während das Gewicht der Flanschverbindung 210 optimiert ist.

In dem Ausführungsbeispiel von Fig. 11 ist eine Mehrzahl von Vorsprüngen 218 auf den Zungen 212 vorgesehen. Diese Vorsprünge 218 dienen dazu, ein Element 219 zu halten. Das Element 219 stellt eine GFK-Lasche dar, die die Last in das Rotorblatt einleiten soll. Durch die Ausgestaltung der Vorsprünge 218 und die Lasche 219 soll ein Formschluss zwischen dem Flansch und dem Material des Rotorblatts ermöglicht werden. Optional kann die GFK-Lasche 219 ein integraler Bestandteil des Rotorblatts 108 bzw. des Rotorblattmaterials darstellen. Die Vorsprünge 218 sind ferner vorgesehen, um einen Formschluss mit dem Rotorblattmaterial 108a herzustellen.

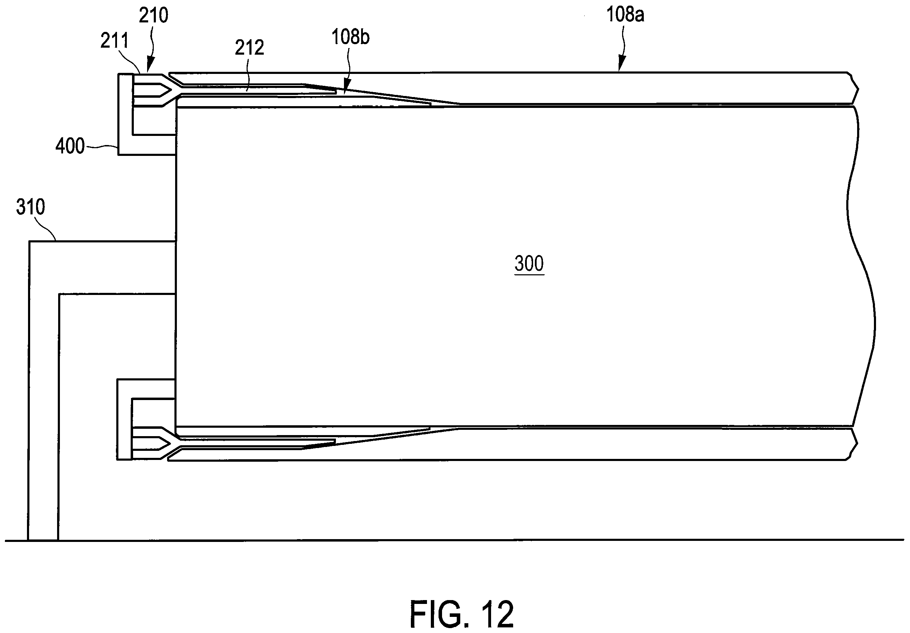

Fig. 12 zeigt eine schematische Darstellung bei der Herstellung eines Rotorblattes gemäß einem elften Ausführungsbeispiel. Ein Wickelkern 300 wird mit einer Halterung 310 vorgesehen. Ferner wird eine Positionierung 400 vorgesehen. An dem Wickelkern 300 kann ein Infusionslaminatabschnitt 108b vorgesehen werden. Auf diesem Infusionslaminatabschnitt 108b kann die Flanschverbindung 210 und insbesondere das zweite Ende 212 der Flanschverbindung 210 platziert werden. Die Flanschverbindung 210 ist rotationssymmetrisch ausgestaltet. Gemäß dem elften Ausführungsbeispiel wird das erste Ende 212 des Rotorblattanschlusses in das Rotorblattmaterial eingewickelt.

Der erfindungsgemäße Rotorblattanschluss ermöglicht eine wesentliche Reduzierung des Gewichts des Rotorblattwurzelbereiches des Rotorblatts. Dadurch, dass die Querbolzen und damit die Querbohrungen sowie die Längsbohrungen für die Längsbolzen wegfallen, kann der Rotorblattwurzelbereich des Rotorblattes wesentlich dünner ausgestaltet werden.

Gemäß der Erfindung wird ein Stahlflansch als Verbindungsflansch vorgesehen, welcher in das Rotorblattmaterial eingewickelt wird.

In den obigen Ausführungsbeispielen weist das erste Ende 211 des Verbindungsflansches 210 zwei Arme auf und der Querschnitt ist im Wesentlichen Y-förmig. Alternativ dazu kann der Verbindungsflansch im Querschnitt T-förmig ausgestaltet sein.

Gemäß der Erfindung kann die Flanschverbindung 210 einen Gusseisenflansch darstellen.

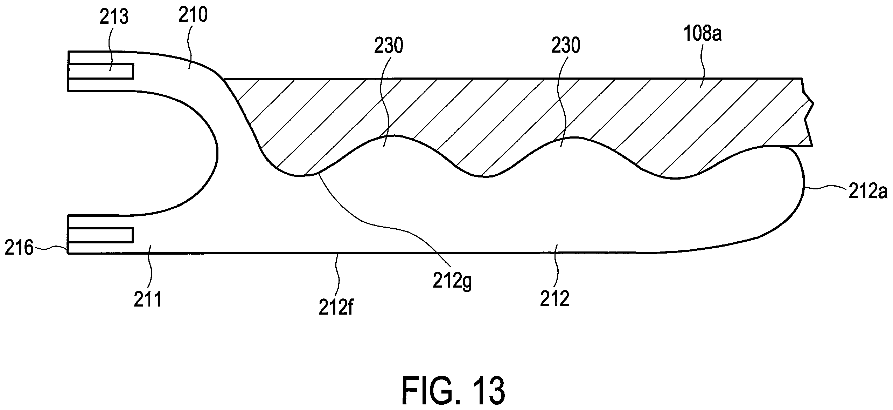

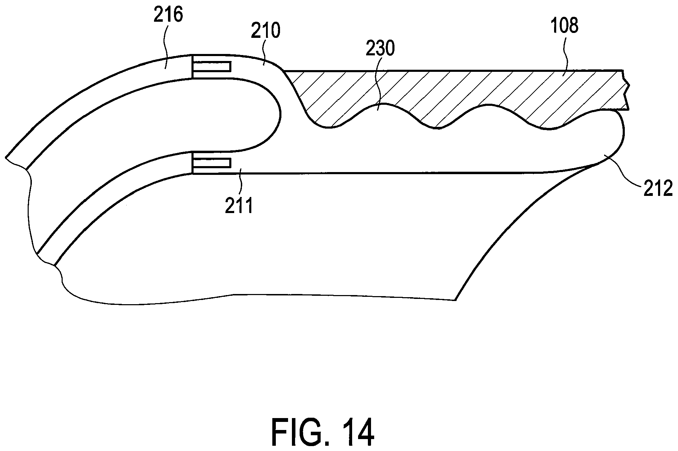

Fig. 13 zeigt eine schematische Schnittansicht und Fig. 14 zeigt eine perspektivische Darstellung eines Ausschnitts einer Flanschverbindung eines Rotorblattanschlusses gemäß einem zwölften Ausführungsbeispiel. Die Flanschverbindung 210 weist ein erstes Ende 211 und ein zweites Ende 212 auf. Das erste Ende 211 dient dazu, das Rotorblatt 108 direkt oder indirekt an einer Nabe einer Windenergieanlage zu befestigen. Das zweite Ende 212 wird in das Rotorblattmaterial 108 integriert. Die Flanschverbindung 210 gemäß dem zwölften Ausführungsbeispiel stellt einen komplett rotationssymmetrischen Flansch dar, d. h. auch das zweite Ende 212 weist keine Laschen oder Zungen auf. Im Bereich des zweiten Endes 212 und insbesondere an der Außenseite des zweiten Endes ist ein Profil 230 vorgesehen. Optional kann dieses Profil 230 die Form eines Schraubengewindes, eines Trapezgewindes und/oder eines Sägegewindes darstellen. Die Flanschverbindung 210 liegt insbesondere an der Außenseite des zweiten Endes 212 an einem Material 108 des Rotorblattes an. Das Material 108 kann beispielsweise gemäß dem im elften Ausführungsbeispiel beschriebenen Wickelprozess aufgebracht sein. Optional wird ein Formschluss zwischen der Flanschverbindung 210 und dem Rotorblattmaterial 108 erreicht.

Optional ist kein Rotorblattmaterial 108 an der Innenseite 212f vorgesehen. Das Material wird lediglich an der Außenseite 212g vorgesehen.

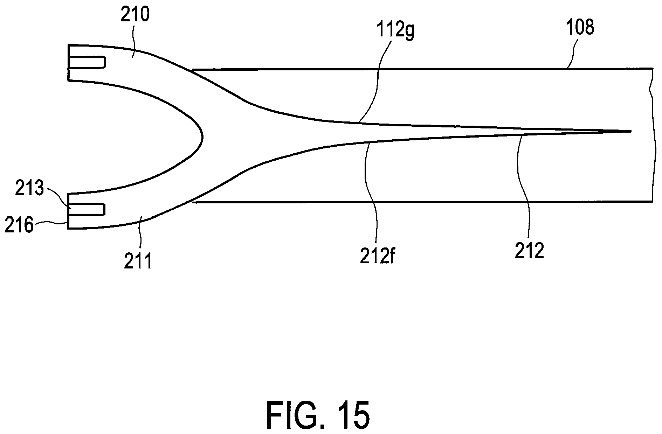

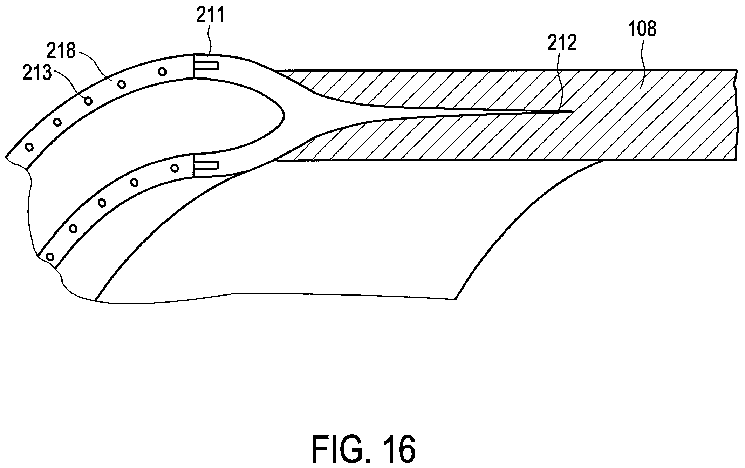

Fig. 15 zeigt eine schematische Schnittansicht und Fig. 16 zeigt eine perspektivische Darstellung eines Ausschnitts einer Flanschverbindung eines Rotorblattanschlusses gemäß einem dreizehnten Ausführungsbeispiel. Die Flanschverbindung 210 weist ein erstes Ende 211 und ein zweites Ende 212 auf. An dem ersten Ende 211 ist eine Stirnseite 216 vorgesehen, welche Bohrungen 213 zur Aufnahme von Befestigungsmitteln aufweist. Das erste Ende 211 dient dazu, an einer Nabe einer Windenergieanlage befestigt zu werden. Das zweite Ende 212 dient der Befestigung der Flanschverbindung in einem Material 108a des Rotorblattes 108. Die Flanschverbindung ist optional komplett rotationssymmetrisch vorgesehen, d. h. sie weist keine Laschen oder Zungen auf. Das zweite Ende 212 ist optional spitz zulaufend ausgestaltet und weist sowohl an seiner Innenseite 212f als auch an seiner Außenseite 212g Material des Rotorblattes auf. An der Innenseite 212f kann ein Infusionslaminat und an der Außenseite 212g kann das Material mittels eines Wickelprozesses aufgebracht werden. Gemäß dem dreizehnten Ausführungsbeispiel wird ein Stoffschluss zwischen der Flanschverbindung 210 und dem Rotorblatt 108 vorgesehen.

Gemäß der Erfindung wird ein Windenergieanlagen-Rotorblatt mit einem Rotorblattanschluss vorgesehen. Der Rotorblattanschluss weist eine Flanschverbindung auf, die ein erstes und zweites Ende aufweist. Das erste Ende weist eine Stirnseite mit einer Mehrzahl von Bohrungen auf, wobei die Stirnseite eine erste Ebene aufspannt. An dem zweiten Ende ist eine Mehrzahl von Zungen vorgesehen, welche sich optional senkrecht zur ersten Ebene erstrecken.

Gemäß der Erfindung kann die Flanschverbindung 110 in einem Sphäroguss, d.h. ein Guss mit Kugelgraphit, hergestellt werden. Hierbei wird dem Eisen Kugelgraphit beigemischt. Dies hat den Vorteil, dass der Sphäroguss eine wesentlich höhere Viskosität als bei einem normalen Eisenguss hat.

Gemäß einem Aspekt der vorliegenden Erfindung kann das zweite Ende 112 der Flanschverbindung 110 ohne Zungen oder Ausnehmungen ausgestaltet sein.

Gemäß einem Aspekt der vorliegenden Erfindung kann die Flanschverbindung beispielswiese durch ein Sandstrahlverfahren nach dem Gießvorgang gereinigt werden. Hiermit kann die Haft- oder Klebeeigenschaften der Flanschverbindung während des Wickelprozesses verbessert werden.

## Patentansprüche

1. Windenergieanlagen-Rotorblatt, mit
einer Rotorblattspitze (108e),
einer Rotorblattwurzel (108f), und
einem Rotorblattanschluss (200) in Bereich der Rotorblattwurzel (108f) mit einer rotationssymmetrischen Flanschverbindung (210), die ein erstes und zweites Ende (211, 212) aufweist,
wobei das erste Ende (211) eine Mehrzahl von Bohrungen (213) zur Aufnahme von Befestigungsmitteln (220) zur Befestigung an einer Nabe einer Windenergieanlage aufweist,
wobei das zweite Ende (212) sich entlang einer Richtung einer Rotationsachse der Flanschverbindung erstreckt und in oder an einem Material (108a) der Rotorblattwurzel (108a) befestigt ist,
**dadurch gekennzeichnet, dass** das erste Ende (211) der Flanschverbindung (210) zwei Arme (211, 211a, 211b) jeweils mit einer Stirnseite (216) und einer Mehrzahl der Bohrungen (23) in der Stirnseite (216) aufweist,
wobei die Flanschverbindung (210) aus einem Metall gegossen oder in einem Sphäroguss-Verfahren hergestellt ist.

2. Windenergieanlagen-Rotorblatt nach Anspruch 1, wobei
wobei das zweite Ende (212) eine Mehrzahl von sich in Richtung der Rotationsachse der Flanschverbindung (210) erstreckenden Zungen oder Vorsprüngen (212) aufweist, die in einem Material (108) der Rotorblattwurzel (108f) befestigt sind, oder wobei das zweite Ende rotationssymmetrisch ausgestaltet ist.

3. Windenergieanlagen-Rotorblatt nach Anspruch 1 oder 2, wobei
das erste Ende (211) im Bereich der Bohrungen (213) einen ersten Abschnitt (214) und zwischen den Bohrungen (213) einen zweiten Abschnitt (215) aufweist, wobei die Breite des zweiten Abschnitts (215) kleiner ist als die Breite des ersten Abschnitts (214),
wobei der erste Abschnitt (215) Ausnehmungen (215a) auf zumindest einer Seite der Arme (211) aufweist.

4. Windenergieanlagen-Rotorblatt nach einem der Ansprüche 1 bis 3, wobei
ein Querschnitt der Flanschverbindung (210) im Wesentlichen Y-förmig ausgestaltet ist

5. Windenergieanlagen-Rotorblatt nach einem der Ansprüche 1 bis 4, wobei
die Zungen oder Vorsprünge (212) des zweiten Endes (212) der Flanschverbindung (210) an zumindest einer Seite mindestens einen Insert (212b) aufweist.

6. Windenergieanlagen-Rotorblatt nach einem der Ansprüche 1 bis 5, wobei
die Zungen oder Vorsprünge (212) des zweiten Endes (212) der Flanschverbindung (210) löffel-förmig ausgestaltet sind.

7. Windenergieanlagen-Rotorblatt nach einem der Ansprüche 1 bis 6, wobei
das zweite Ende (212) der Flanschverbindung (210) in das Material der Rotorblattwurzel (108) eingewickelt ist.

8. Windenergieanlagen-Rotorblatt nach einem der Ansprüche 1 bis 7, wobei
die Zungen oder Vorsprünge (212) des zweiten Endes (212) der Flanschverbindung (210) gerade oder wellig ausgestaltet sind.

9. Windenergieanlagen-Rotorblatt nach einem der Ansprüche 1 bis 8, wobei
die Flanschverbindung (210) an einer Außenseite (212g) des zweiten Endes (212) ein Profil, insbesondere in Form eines Schraubengewindes, eines Trapezgewindes oder eines Sägegewindes aufweist.

10. Windenergieanlagen-Rotorblatt nach Anspruch 9, wobei das Material (108) des Rotorblattes auf der Außenseite (212g) des zweiten Endes (212) aufgebracht, insbesondere gewickelt ist.

11. Windenergieanlagen-Rotorblattanschluss, mit
einer rotationssymmetrischen Flanschverbindung (210), die ein erstes und zweites Ende (211, 212) aufweist,
wobei das erste Ende (211) eine Mehrzahl von Bohrungen (213) zur Aufnahme von Befestigungsmitteln zur Befestigung an einer Nabe einer Windenergieanlage aufweist, und
wobei das zweite Ende (212) sich in Richtung einer Rotationsachse der Flanschverbindung erstreckt und in oder an einem Material (108a) des Rotorblattes befestigt ist, **dadurch gekennzeichnet, dass** das erste Ende (211) der Flanschverbindung (210) zwei Arme (211, 211a, 211b) jeweils mit einer Stirnseite (216) und einer Mehrzahl der Bohrungen (23) in der Stirnseite (216) aufweist,
wobei die Flanschverbindung (210) aus einem Metall gegossen oder in einem Sphäroguss-Verfahren hergestellt ist.

12. Verfahren zum Herstellen eines Windenergieanlagen-Rotorblatts, das einen Rotorblattanschluss (200) mit einer rotationssymmetrischen Flanschverbindung (210) aufweist, die ein erstes und zweites Ende (211, 212) aufweist, wobei das erste Ende (211) eine Mehrzahl von Bohrungen (213) zur Aufnahme von Befestigungsmitteln zur Befestigung an einer Nabe einer Windenergieanlage aufweist, wobei das zweite Ende (212) sich in Richtung einer Rotationsachse der Flanschverbindung erstreckt mit den Schritten:
Platzieren der Flanschverbindung (210) auf einen Wickelkern (300), und
Einwickeln des zweiten Endes (212) mit einem Faser-Verbund-Werkstoff beim Wickeln eines Rotorblattwurzelbereichs,
wobei das erste Ende (211) der Flanschverbindung (210) zwei Arme (211, 211a, 211b) jeweils mit einer Stirnseite (216) und einer Mehrzahl der Bohrungen (23) in der Stirnseite (216) aufweist,
wobei die Flanschverbindung (210) aus einem Metall gegossen oder in einem Sphäroguss-Verfahren hergestellt ist.

13. Windenergieanlage mit mindestens einem Windenergieanlagen-Rotorblatt nach einem der Ansprüche 1 bis 10.

## Claims

1. Wind turbine rotor blade with
a rotor blade tip (108e),
a rotor blade root (108f), and
a rotor blade connection (200) in the region of the rotor blade root (108f) with a rotationally symmetrical flange coupling (210) which has a first and a second end (211, 212),
wherein the first end (211) has multiple bores (213) for receiving fastening means (220) for fastening to a hub of a wind turbine,
wherein the second end (212) extends in the direction of an axis of rotation of the flange coupling and is fastened in or on material (108a) of the rotor blade root (108a),
**characterized in that**
the first end (211) of the flange coupling (210) has two arms (211, 211a, 211b), each with a front side (216) and multiple bores (23) in the front side (216),
wherein the flange coupling (210) is cast from metal or is produced in a nodular graphite casting process.

2. Wind turbine rotor blade according to Claim 1, wherein
the second end (212) has multiple tongues of projections (212) which extend in the direction of the axis of rotation of the flange coupling (210) and are fastened in material (108) of the rotor blade root (108f), or wherein the second end has a rotationally symmetrical design.

3. Wind turbine rotor blade according to Claim 1 or 2, wherein
the first end (211) has a first section (214) in the region of the bores (213) and a second section (215) between the bores (213), wherein the width of the second section (215) is smaller than the width of the first section (214),
wherein the first section (215) has recesses (215a) on at least one side of the arms (211).

4. Wind turbine rotor blade according to one of Claims 1 to 3, wherein
a cross-section of the flange coupling (210) is essentially Y-shaped.

5. Wind turbine rotor blade according to one of Claims 1 to 4, wherein
the tongues or projections (212) of the second end (212) of the flange coupling (210) have at least one insert (212b) on at least one side.

6. Wind turbine rotor blade according to one of Claims 1 to 5, wherein
the tongues or projections (212) of the second end (212) of the flange coupling (210) have a spoon-shaped design.

7. Wind turbine rotor blade according to one of Claims 1 to 6, wherein
the second end (212) of the flange coupling (210) is enveloped in the material of the rotor blade root (108).

8. Wind turbine rotor blade according to one of Claims 1 to 7, wherein
the tongues or projections (212) of the second end (212) of the flange coupling (210) have a straight or undulating design.

9. Wind turbine rotor blade according to one of Claims 1 to 8, wherein
the flange coupling (210) has, on an outer side (212g) of the second end (212), a profile in particular in the form of a screw thread, a trapezoidal thread or a buttress thread.

10. Wind turbine rotor blade according to Claim 9, wherein
the material (108) of the rotor blade is applied, in particular is wound on the outer side (212g) of the second end (212).

11. Wind turbine rotor blade connection, with
a rotationally symmetrical flange coupling (210) which has a first and a second end (211, 212),
wherein the first end (211) has multiple bores (213) for receiving fastening means for fastening to a hub of a wind turbine, and
wherein the second end (212) extends in the direction of an axis of rotation of the flange coupling and is fastened in or on material (108a) of the rotor blade,
**characterized in that**
the first end (211) of the flange coupling (210) has two arms (211, 211a, 211b), each with a front side (216) and multiple bores (23) in the front side (216),
wherein the flange coupling (210) is cast from a metal or is produced in a nodular graphite casting process.

12. Method for producing a wind turbine rotor blade which has a rotor blade connection (200) with a rotationally symmetrical flange coupling (210) which has a first and a second end (211, 212), wherein the first end (211) has multiple bores (213) for receiving fastening means for fastening to a hub of a wind turbine, wherein the second end (212) extends in the direction of an axis of rotation of the flange coupling, with the steps of:
placing the flange coupling (210) on a winding core (300), and
enveloping the second end (212) with a fibre-reinforced composite during the winding of a rotor blade root region,
**characterized in that**
the first end (211) of the flange coupling (210) has two arms (211, 211a, 211b), each with a front side (216) and multiple bores (23) in the front side (216),
wherein the flange coupling (210) is cast from metal or is produced in a nodular graphite casting process.

13. Wind turbine with at least one wind turbine rotor blade according to one of Claims 1 to 10.

## Revendications

1. Pale de rotor d'éolienne, avec
une pointe de pale de rotor (108e),
une base de pale de rotor (108f), et
un raccord de pale de rotor (200) dans la zone de la base de pale de rotor (108f) avec un système de liaison à bride (210) symétrique en rotation, qui présente une première et une seconde extrémité (211, 212),
dans laquelle la première extrémité (211) présente une pluralité d'alésages (213) pour recevoir des moyens de fixation (220) destinés à être fixés au niveau d'un moyeu d'une éolienne,
dans laquelle la seconde extrémité (212) s'étend le long d'une direction d'un axe de rotation du système de liaison à bride et est fixée dans ou au niveau d'un matériau (108a) de la base de pale de rotor (108a),
**caractérisée en ce que**
la première extrémité (211) du système de liaison à bride (210) présente deux bras (211, 211a, 211b) respectivement avec un côté frontal (216) et une pluralité d'alésages (23) dans le côté frontal (216),
dans laquelle le système de liaison à bride (210) est coulé à partir d'un métal ou est fabriqué lors d'un procédé à base de fonte nodulaire.

2. Pale de rotor d'éolienne selon la revendication 1, dans laquelle
la seconde extrémité (212) présente une pluralité de languettes ou de saillies (212) s'étendant en direction de l'axe de rotation du système de liaison à bride (210), qui sont fixées dans un matériau (108) de la base de pale de rotor (108f), ou
dans laquelle la seconde extrémité est configurée de manière symétrique en rotation.

3. Pale de rotor d'éolienne selon la revendication 1 ou 2, dans laquelle
la première extrémité (211) présente dans la zone des alésages (213) une première section (214) et, entre les alésages (213), une deuxième section (215), dans laquelle la largeur de la deuxième section (215) est inférieure à la largeur de la première section (214),
dans laquelle la première section (215) présente des évidements (215a) sur au moins un côté des bras (211).

4. Pale de rotor d'éolienne selon l'une quelconque des revendications 1 à 3, dans laquelle
une section transversale du système de liaison à bride (210) est configurée sensiblement en forme de Y.

5. Pale de rotor d'éolienne selon l'une quelconque des revendications 1 à 4, dans laquelle
les languettes ou les saillies (212) de la seconde extrémité (212) du système de liaison à bride (210) présentent au niveau d'au moins un côté au moins un insert (212b).

6. Pale de rotor d'éolienne selon l'une quelconque des revendications 1 à 5, dans laquelle
les languettes ou les saillies (212) de la seconde extrémité (212) du système de liaison à bride (210) sont configurées en forme de cuillère.

7. Pale de rotor d'éolienne selon l'une quelconque des revendications 1 à 6, dans laquelle
la seconde extrémité (212) du système de liaison à bride (210) est introduite par enroulement dans le matériau de la base de pale de rotor (108).

8. Pale de rotor d'éolienne selon l'une quelconque des revendications 1 à 7, dans laquelle
les languettes ou saillies (212) de la seconde extrémité (212) du système de liaison à bride (210) sont configurées de manière rectiligne ou de manière ondulée.

9. Pale de rotor d'éolienne selon l'une quelconque des revendications 1 à 8, dans laquelle
le système de liaison à bride (210) présente au niveau d'un côté extérieur (212g) de la seconde extrémité (212) un profil, en particulier sous la forme d'un filetage hélicoïdal, d'un filetage trapézoïdal ou d'un filetage en dent de scie.

10. Pale de rotor d'éolienne selon la revendication 9, dans laquelle
le matériau (108) de la pale de rotor est appliqué, en particulier est enroulé, sur le côté extérieur (212g) de la seconde extrémité (212).

11. Raccord de pale de rotor d'éolienne, avec
un système de liaison à bride (210) symétrique en rotation, qui présente une première et une seconde extrémité (211, 212),
dans lequel la première extrémité (211) présente une pluralité d'alésages (213) pour recevoir des moyens de fixation destinés à être fixés au niveau d'un moyeu d'une éolienne, et
dans lequel la seconde extrémité (212) s'étend en direction d'un axe de rotation du système de liaison à bride et est fixée dans ou au niveau d'un matériau (108a) de la pale de rotor,
**caractérisé en ce que**
la première extrémité (211) du système de liaison à bride (210) présente deux bras (211, 211a, 211b) respectivement avec un côté frontal (216) et une pluralité d'alésages (23) dans le côté frontal (216),
dans lequel le système de liaison à bride (210) est coulé à partir d'un métal ou est fabriqué lors d'un procédé à base de fonte nodulaire.

12. Procédé de fabrication d'une pale de rotor d'éolienne, qui présente un raccord de pale de rotor (200) avec un système de liaison à bride (210) symétrique en rotation, qui présente une première et une seconde extrémité (211, 212), dans lequel la première extrémité (211) présente une pluralité d'alésages (213) pour recevoir des moyens de fixation destinés à être fixés au niveau d'un moyeu d'une éolienne, dans lequel la seconde extrémité (212) s'étend en direction d'un axe de rotation du système de liaison à bride, avec les étapes :
de placement du système de liaison à bride (210) sur un noyau d'enroulement (300), et
d'introduction par enroulement de la seconde extrémité (212) avec un matériau composite à base de fibres lors de l'enroulement d'une zone de base de pale de rotor,
dans lequel la première extrémité (211) du système de liaison à bride (210) présente deux bras (211, 211a, 211b) respectivement avec un côté frontal (216) et une pluralité d'alésages (23) dans le côté frontal (216),
dans lequel le système de liaison à bride (210) est coulé à partir d'un métal ou est fabriqué lors d'un procédé à base de fonte nodulaire.

13. Éolienne avec au moins une pale de rotor d'éolienne selon l'une quelconque des revendications 1 à 10.
